(19)

Europäisches
Patentamt
European
Patent Office
Office européen
des brevets

(11) **EP 4 264 466 B1**

(12) **EUROPEAN PATENT SPECIFICATION**

(45) Date of publication and mention
of the grant of the patent:
**04.09.2024 Bulletin 2024/36**

(51) International Patent Classification (IPC):
**G06F 21/57** (2013.01)   **G06F 21/73** (2013.01)
**G06F 21/64** (2013.01)

(21) Application number: **21827254.0**

(22) Date of filing: **15.11.2021**

(52) Cooperative Patent Classification (CPC):
**G06F 21/73; G06F 21/572; G06F 21/575;
G06F 21/64**

(86) International application number:
**PCT/US2021/059340**

(87) International publication number:
**WO 2022/132360 (23.06.2022 Gazette 2022/25)**

(54) **ATTESTING UPDATE OF A FIRMWARE LAYER**

BESTÄTIGUNGSAKTUALISIERUNG EINER FIRMWARE-SCHICHT

ATTESTATION DE MISE À JOUR D'UNE COUCHE DE MICROLOGICIEL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.12.2020 GB 202020059
13.01.2021 US 202117148548**

(43) Date of publication of application:
**25.10.2023 Bulletin 2023/43**

(73) Proprietor: **Microsoft Technology Licensing, LLC
Redmond, WA 98052-6399 (US)**

(72) Inventors:
• **VASWANI, Kapil**
  **Redmond, Washington 98052-6399 (US)**
• **FOURNET, Cédric Alain Marie**
  **Redmond, Washington 98052-6399 (US)**
• **VOLOS, Stavros**
  **Redmond, Washington 98052-6399 (US)**

(74) Representative: **CMS Cameron McKenna Nabarro
Olswang LLP
Cannon Place
78 Cannon Street
London EC4N 6AF (GB)**

(56) References cited:
**EP-A1- 3 637 297       CN-A- 109 492 352
US-A1- 2020 193 065**

• **RONALD AIGNER ET AL: "Microsoft Confidential
-Draft for Review 1 Device Identity with DICE and
RIoT: Keys and Certificates (Draft for Review)", 1
September 2017 (2017-09-01), pages 1 - 15,
XP055603767, Retrieved from the Internet
<URL:https://www.microsoft.com/en-us/researc
h/wp-content/uploads/2017/09/KeysAndCertifica
tesForDiceAndRIoT-v3-2.docx> [retrieved on
20190709], DOI: MSR-TR-2017-41**
• **LUKAS JÀGER ET AL: "Rolling DICE",
AVAILABILITY, RELIABILITY AND SECURITY,
ACM, 2 PENN PLAZA, SUITE 701NEW
YORKNY10121-0701USA, 29 August 2017
(2017-08-29), pages 1 - 8, XP058371028, ISBN:
978-1-4503-5257-4, DOI:
10.1145/3098954.3103165**

EP 4 264 466 B1

**Description**

BACKGROUND

In some types of computing devices the identity of the computing device is known from a unique device secret (UDS) which a cryptographic public-private key pair, or a random number, burnt into the computing device hardware during manufacture. The unique device secret is useful to enable the computing device to create keys and certificates which attest to particular firmware on the computing device. In an example, a software application which uses the computing device wishes to confirm that the computing device has particular firmware installed, for security reasons. The software application wishes to receive an attestation that the firmware installed on the computing device is as expected, such as by verifying the identity of the firmware using a certificate chain. The computing device hardware is able to use the unique device secret to generate one or more public-private key pairs along with the corresponding certificates which are used by the software application to verify the firmware on the computing device.

Updates to firmware layers of computing devices are used in practice to fix bugs, to carry out maintenance and for deploying upgrades. However, enabling attestation of the updated firmware is not straightforward.

The embodiments described below are not limited to implementations which solve any or all of the disadvantages of known ways of attesting update of a firmware layer. EP 3 637 297 A1 describes a method for secure data protection including generating a firmware digital certificate for a layer of firmware. The firmware operates a hardware component of a compute node. The firmware digital certificate is an attribute certificate. The firmware digital certificate includes a cumulative hash of the layer of firmware and a nonce. The cumulative hash includes a concatenation of a hash of the layer of firmware and a hash of each one or more lower layers of the firmware. The method includes authenticating the layer of firmware using a trusted data store. The trusted data store includes a binary image of an expected layer of firmware and a certificate chain comprising the hardware digital certificate and the firmware digital certificate.

CN 109 492 352 A describes the implementation methods and device of a kind of device identification combine engine able to solve the problem of UDS leakage. The DICE includes Hard link input interface, selector, one-way function calculator, the first read-write register and the second read-write register of unique device secret UDS; First read-write register, for storing the input parameter all the way of one-way function calculator; Output parameter calculated in one-way function calculator, the corresponding UDS of chip for being inputted according to the Hard link input interface of the input parameter and UDS by selector; Second read-write register, for saving the output parameter of one-way function calculator; Selector, for disconnecting the connection with the Hard link input interface of UDS after obtaining output parameter to function calculator.

US 2020/0193065 A1 describes systems and methods for implementing a Device Identifier Composition Engine (DICE)-based trusted computing base architecture, among various hardware, firmware, and software layers. Attestation and security operations may be supported in a multi-layered approach, by operations to: obtain a component identifier from a particular layer of at least one operational layer in a computing system; obtain a first compound device identifier, produced as an attestation value at a lower layer; and process, with a function, the component identifier from the particular layer and the first compound device identifier from the lower layer, to produce a second compound device identifier. In various examples, the second compound device identifier indicates attestation of at least one layer located at or below the particular layer.

SUMMARY

The invention is set out in the appended set of claims.

The following presents a simplified summary of the disclosure in order to provide a basic understanding to the reader. This summary is not intended to identify key features or essential features of the claimed subject matter nor is it intended to be used to limit the scope of the claimed subject matter. Its sole purpose is to present a selection of concepts disclosed herein in a simplified form as a prelude to the more detailed description that is presented later.

In various examples there is a method of enabling an attestable update of a firmware layer that provides a unique identity of a computing device. The method comprises using an immutable firmware layer to access a unique device secret. The immutable firmware layer is used to derive a hardware device identity (HDI) from the unique device secret. The immutable firmware layer is used to derive a compound device identity (CDI) from a measurement of the firmware layer and the unique device secret. The CDI and HDI are made available to the firmware layer. The firmware layer is used to issue a local certificate to endorse a device identity key, derived from the CDI, the local certificate signed by a key derived from the HDI. The unique device secret is unique among a plurality of devices.

Many of the attendant features will be more readily appreciated as the same becomes better understood by reference to the following detailed description considered in connection with the accompanying drawings.

DESCRIPTION OF THE DRAWINGS

The present description will be better understood from the following detailed description read in light of the accompanying drawings, wherein:

FIG. 1 is a schematic diagram of a data center comprising host computing devices with trusted peripheral devices;
FIG. 2 is a schematic diagram of a host and a peripheral device and showing a unique device secret, and firmware;
FIG. 3 is a schematic diagram of a device identifier composition engine and layers of firmware;
FIG. 4 is a schematic diagram of a method of attesting a firmware layer which is incompatible with an update to the firmware layer;
FIG. 5 is a schematic diagram of another method of attesting a firmware layer which is compatible with an update to the firmware layer;
FIG. 6 is a schematic diagram of a certificate chain.

Like reference numerals are used to designate like parts in the accompanying drawings.

DETAILED DESCRIPTION

The detailed description provided below in connection with the appended drawings is intended as a description of the present examples and is not intended to represent the only forms in which the present examples are constructed or utilized. The description sets forth the functions of the examples and the sequence of operations for constructing and operating the examples. However, the same or equivalent functions and sequences may be accomplished by different examples

Various embodiments are described which enable attestation of firmware at a computing device. In many cases the computing device is a peripheral device such as a graphics processing unit, field-programmable gate array (FPGA), application-specific integrated circuit, cryptographic accelerator, video processing unit, regular expression accelerator, data compression accelerator, artificial intelligence accelerator or other device used to complement a central processing unit (CPU). The CPU is part of functionality at a host computing device. Peripheral devices which comprise computer hardware to perform functions more efficiently than is possible in software running on a general-purpose CPU are often very useful units, separate from the CPU which act as hardware accelerators. Typically these types of peripheral device improve the execution of specific types of algorithm by allowing greater concurrency.

Increasingly there is a desire to work with sensitive code and or sensitive data and to retain security and privacy. Often large amounts of sensitive code and or data are to be processed using resource intensive algorithms and peripheral devices are an option to improve efficiency in such situations.

Where security and privacy are important, there is often a desire for one or more applications to be able to receive and verify an attestation from the peripheral device in order to know that the firmware on the peripheral device is as expected. For example, the firmware on the peripheral device is configured to enforce a trusted execution environment on the peripheral device and a verifier wants to know that the firmware on the peripheral device is correct and has not been tampered with or replaced by a malicious party. The verifier is an application which verifies the attestation. The verifier is at any computing element which is able to communicate with the host. In some cases the verifier is an application which is part of another service running on a server separate from the host and in communication with the host over any suitable communications network. A user relies on a trusted system to implement the verifier and verify the attestation and in some cases the host computing device is not trusted.

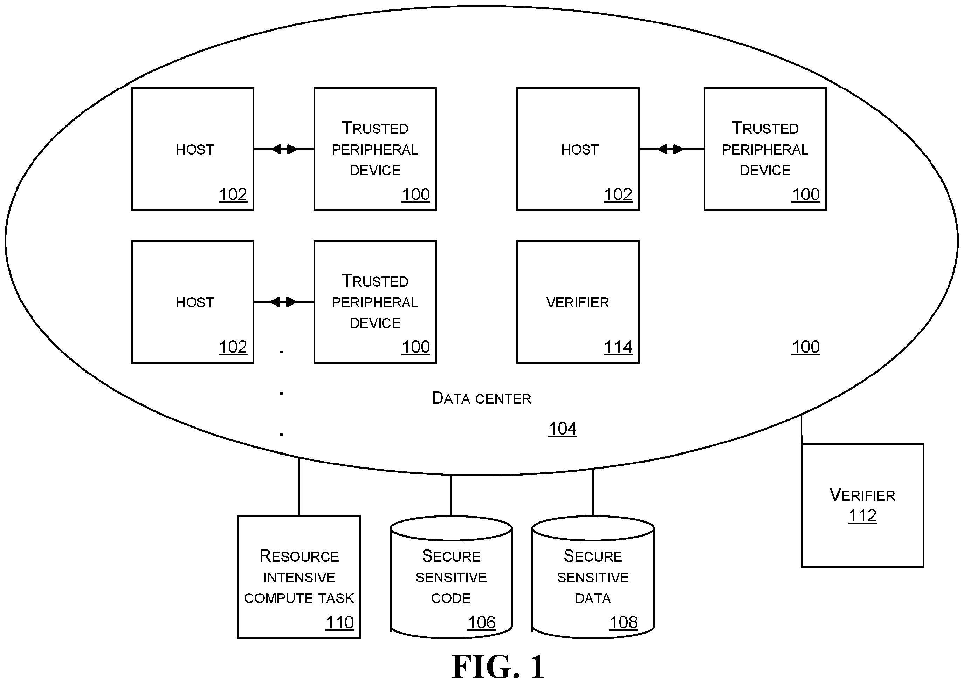

FIG. 1 is a schematic diagram of a data center 104 comprising a plurality of host computing devices 102. Individual ones of the host computing devices 102 are connected to trusted peripheral devices 100. The host computing devices 102 are interconnected using communications links which are not shown in FIG. 1 for clarity and the resulting network may include one or more computing devices which have no peripheral devices. Suppose the data center 104 is used to execute a resource intensive compute task 110 using sensitive code 106 and sensitive data 108. The data center is able to distribute the resource intensive compute task amongst various user runtime processes at the hosts 102. The trusted peripheral devices 100 are able to execute computations, in efficient ways making use of parallelization, and to do this in a way which is secure even though the hosts 102 may be untrusted and even though other unsecure processes are executing in the data center at the same time. In a few years it is expected that a majority of compute cycles in public clouds will be contributed by peripheral devices such as accelerators. In FIG. 1 a first verifier 112 is depicted outside the data centre and a second verifier 114 is depicted inside the data centre. In practice there are many verifiers either inside or outside the data centre. In FIG. 1 the first verifier 112 is an application at a server which is in communication with the data center 104 via any communications network. For example, the first verifier 112 is a on-premise machine at an enterprise within the enterprise trusted boundary. For example, the second verifier 114 is a trusted service that runs in a trusted execution environment in the data centre.

FIG. 1 illustrates the situation for a data center. However, it is also possible to use a host 102 and trusted peripheral device 100 in stand-alone situations or in other types of deployment.

Suppose that each of the peripheral devices in FIG. 1 has sent a certificate to one of the two verifiers 112, 114 so that a verifier is able to verify that firmware on the peripheral device is as expected. A peripheral device generates a certificate for a public part of a key. The peripheral device derives the key using the unique device identifier of the peripheral device (where the unique device identifier is unique among devices) and a measurement of a firmware layer of the peripheral device. The certificate is referred to as a local certificate because it is generated by the peripheral device rather than a certificate authority of the manufacturer. The firmware layer that is measured to generate the key, and which generates the local certificate, is referred to as a firmware layer which provides a unique identity of the peripheral device. In an example, the firmware layer which provides a unique identity of the peripheral device is a RIoT core as explained below.

The firmware layer of the peripheral device, which provides the unique identity of the peripheral device, is mutable and suppose it is modified as a result of a firmware upgrade of the peripheral device. A local certificate previously generated is no longer workable to attest the firmware on the peripheral device since the measurement of the upgraded firmware layer will be different from the measurement of the original firmware layer.

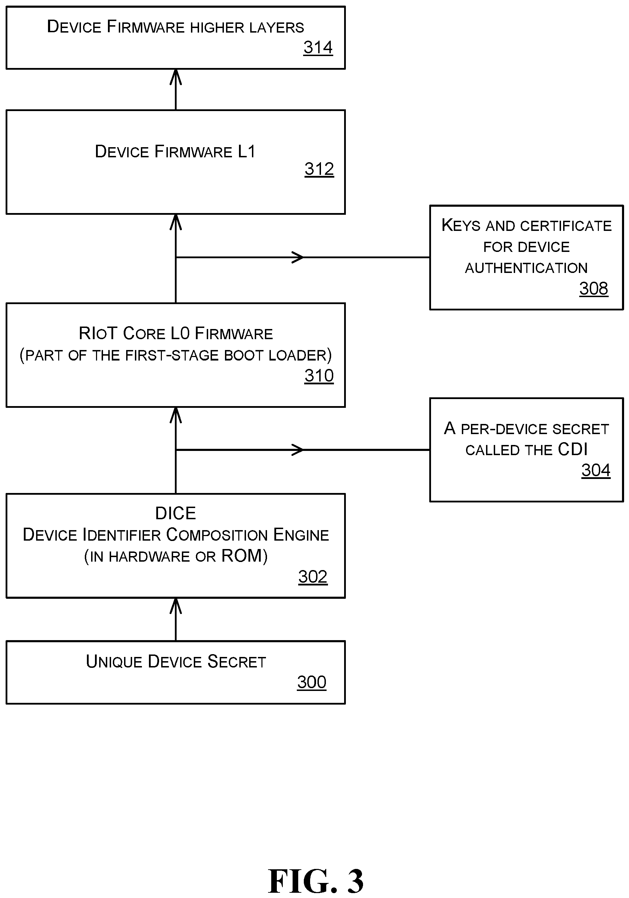

The situation mentioned above occurs for any computing device where device identity and attestation is handled using the Device Identifier Composition Engine (DICE) standard of the Trusted Computing Group (TCG). DICE is a standardized method to create secret keys to be used by devices for authentication, attestation, data encryption and other purposes. DICE is typically implemented in hardware or read only memory (ROM)-based firmware. Robust Internet of Things (RIoT) is a family of protocols for using DICE-derived secrets. RIoT includes protocols for device attestation whereby there is secure reporting of the firmware that booted on a computing device. More detail about DICE and RIoT are given below with reference to FIG. 3.

Various approaches for dealing with the problem of the local certificate being unworkable after a change to the firmware are considered.

One approach involves making the firmware layer from which the measurement is taken to generate the local certificate immutable for the lifetime of the device. This is implemented by storing (a hash of) the firmware layer in ROM, or by ensuring that the manufacturer issues device identity certificates for a single version of the firmware layer. In either case, updates to the firmware layer are not supported. With this approach it is best to keep the firmware layer as small and simple as possible since it cannot be upgraded. This approach is inflexible and does not enable updates to the firmware layer.

Another approach is to exclude the firmware layer from the measurement used to create the local certificate. This allows the firmware layer to be updated without changing device identity. However, it places a lot of trust in the manufacturer of the computing device, who may use an update mechanism to add backdoors after a device has been deployed. This approach is not satisfactory form a security perspective.

Another approach is for the manufacturer to issue a fresh certificate for every deployed device. However, this approach is only workable where the unique device secret is known to the manufacturer. This approach places a lot of administrative burden on the manufacturer. The approach also relies on trust in the manufacturer to keep information about the deployed devices secret.

Another approach is re-certification. In this approach device owners collect requests from the deployed devices for public device identity. The device owners then request the manufacturer to issue fresh certificates for the devices to use to attest their firmware. In confidential computing scenarios, where the device owner is not trusted, an appropriate authentication mechanism is needed to ensure that the manufacturer only signs appropriate keys. This approach introduces complexity and delays.

The inventors devised a way for the local certificate to be workable even after a change to the firmware layer which provides the device identity. In various examples described herein an immutable firmware layer is used to generate an additional secret referred to as Hardware Device Identity (HDI) which is not salted by the measurement of the firmware layer . The HDI remains constant despite firmware updates to the device and is used to enable firmware updates to take place in a manner so that the firmware is attestable in a simple and effective manner.

In various examples there is a method of enabling an attestable update of a firmware layer that provides a unique identity of a computing device. The method comprises using an immutable firmware layer to access a unique device secret. The immutable layer is used to derive a hardware device identity (HDI) from the unique device secret. The immutable layer is used to derive a compound device identity (CDI) from a measurement of the firmware layer, which provides the unique identity, and the unique device secret. The CDI and HDI are made available to the firmware layer. The firmware layer computes and issues a local certificate to endorse a device identity key, derived from the CDI, the local certificate signed by a key derived from the HDI. In this way a local certificate is issued by the firmware layer and is useable by a verifier to verify the firmware update. In contrast to the measurement of the firmware layer which is updated, the HDI remains constant despite the firmware layer update. The HDI is used to derive a key and the key is used to sign the local certificate.

The immutable firmware layer and the firmware layer which is updated operate together in an unconventional manner to achieve the ability to attest to the updated firmware layer.

The immutable firmware layer and the firmware layer which is updated together improve the functioning of the underlying computing device by generating and using the HDI in order to enable a local certificate to be generated to attest to the updated firmware layer.

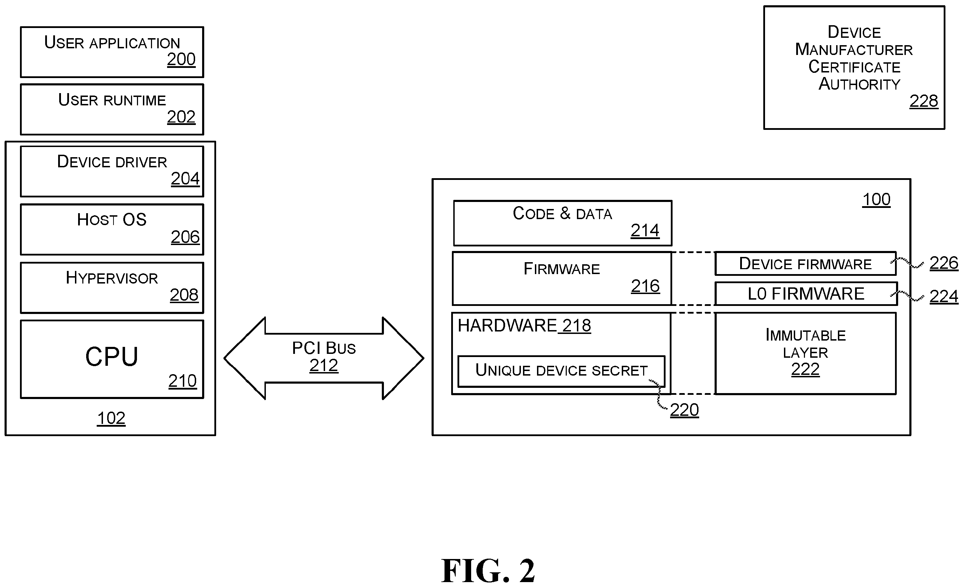

FIG. 2 shows a CPU 210 of a host computing device 102. The host computing device 102 has a software stack comprising a hypervisor 208, host operating system 206, peripheral device driver 204, a user runtime process 202 and a user application 200. The host computing device is connected to a peripheral device 100 via a peripheral component interconnect bus 212. A non-exhaustive list of examples of types of peripheral device is: graphics processing unit, field-programmable gate array (FPGA), application-specific integrated circuit, cryptographic accelerator, video processing unit, regular expression accelerator, data compression accelerator, artificial intelligence accelerator and others.

The peripheral device 100 has a software stack comprising firmware 216 and code and data 214. The hardware of the peripheral device (represented as region 218 in FIG. 2) has burnt into it a unique device secret 220. The unique device secret is provisioned into the hardware during manufacturing. The unique device secret is either generated within the peripheral device from a high entropy source or is provisioned externally.

An immutable firmware layer 222 is installed on the peripheral device as indicated schematically in FIG. 2. Higher firmware layers of the peripheral device comprise a firmware layer providing device identity 224 and device firmware 226 as indicated schematically in FIG. 2.

FIG. 2 also shows a device manufacturer certificate authority 228 which is a computing entity accessible via a communications network and which is able to generate and issue digital certificates. The digital certificates are made available to the owner of the peripheral devices and are available to various services via a certificate cache service.

In one embodiment where the peripheral device 100 complies with the Trusted Computing Group's DICE standard, the immutable firmware layer 222 of firmware implements the DICE layer and the firmware layer providing the device identity implements a RIoT core as now explained with reference to FIG. 3.

FIG. 3 is a schematic diagram of a device identifier composition engine 302 and layers of firmware on a computing device such as the peripheral device of FIGs 1 and 2. Burnt into the device hardware is a unique device secret 300. The DICE 302 is deployed in hardware or ROM of the computing device and has access to the unique device secret 300. The DICE is able to compute and issue a per-device secret called the compound device identity CDI 304. Immediately above the DICE is a layer of firmware referred to as L0 firmware and also referred to as the RIoT core 310. The L0 firmware provides a unique device identity of the computing device as it computes and issues keys and certificates 308 for device authentication. Immediately above the L0 firmware is L1 device firmware 312 and there are zero or more higher layers of device firmware 314 above the L1 device firmware.

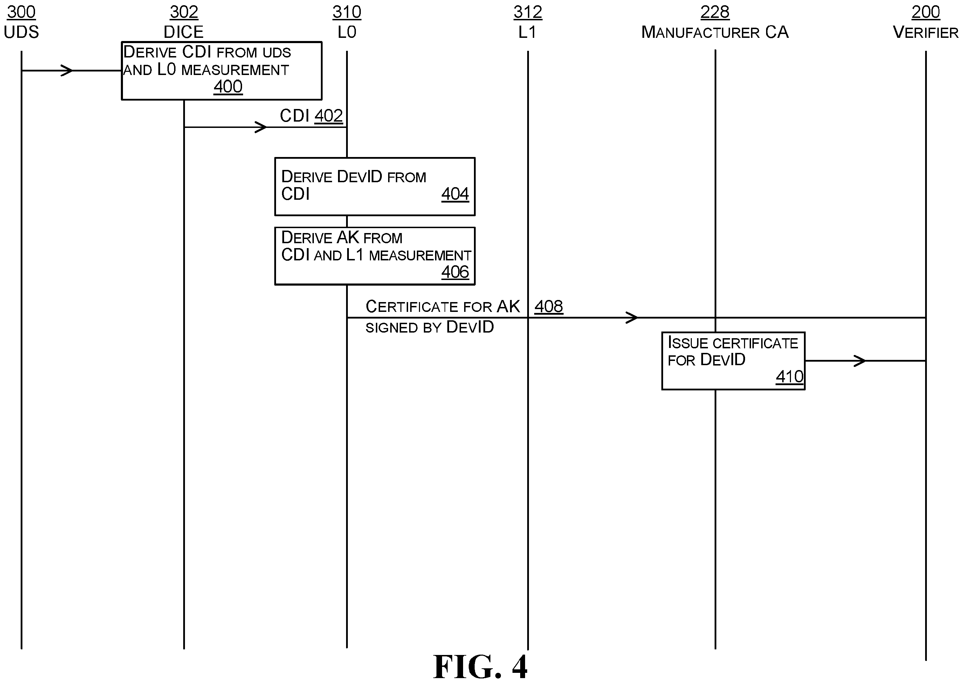

FIG. 4 is a sequence chart of a method of attesting a firmware layer. The method of FIG. 4 cannot be used where the firmware layer L0 is updated. The method of FIG. 4 illustrates a problem that the present technology seeks to overcome. Individual vertical lines are used in FIG. 4 to represent each of, the unique device secret 300, the DICE 302, the L0 firmware 310, the L1 firmware 312, the manufacturer's certification authority 228 and a verifier 200. Horizontal lines in FIG. 4 represent messages sent between the entities represented by the vertical lines and arrow on the horizontal lines represent the directions the messages are sent. The relative vertical position of the horizontal lines in FIG. 4 represents a chronological order in which the messages are sent.

As illustrated in FIG. 4 there is a DICE 302 of a computing device configured to use the Trusted Computing Group's DICE standard. When the computing device comes out of reset, control transfers to the DICE which is immutable. The DICE authenticates the L0 firmware using a public firmware signing key embedded in DICE as a constant. The DICE 302 derives 400 a CDI from the unique device secret (UDS) 300. The CDI is expressed mathematically as:

$$CDI = KDF[UDS](HASH(L0))$$

Where KDF[x](l) is a key derivation which computes a key using x as the key and l as the salt. Any suitable key derivation function is used. The above equation is expressed in words as, a compound device identity key is computed using a key derivation function which takes as arguments the unique device secret and a hash of a measurement of the level L0 firmware layer.

After deriving CDI, DICE removes access to the unique device secret until the next boot cycle using a hardware mechanism such as a latch.

The DICE 302 sends (or makes available) the CDI to the L0 firmware 310 using message 402.

The L0 firmware receives CDI from DICE and optionally authenticates the next layer of firmware L1 312.

The L0 firmware derives 404 a device identity key referred to as DevID from the CDI. The L0 firmware derives 406 an attestation key (AK) from the CDI and an L1 measurement which is a measurement of the level L1 firmware.

$$DevID_{priv}, DevID_{pub} = asym\_keygen(KDF[CDI]("Identity"))$$

$$AK_{priv}, AK_{pub} = asym\_keygen(KDF[CDI](HASH(L1)("Attestation"))$$

Any suitable asymmetric key generation function is used. The above equations are expressed in words as: the private and public parts of the device identity public-private key pair are computed using an asymmetric key generation function given as argument, the result of the key derivation function applied to the compound device identity and a salt denoted "Identity" which is a label string . And, the attestation public-private key pair is computed using the asymmetric key generation function given as argument, the result of the key derivation function applied to the compound device identity and a salt which is a hash of a measurement of the level L1 firmware layer concatenated with a label string "Attestation".

The L0 firmware generates an attestation certificate for the AK and signs it using the private DevID. The attestation certificate is sent 408 to the verifier 200. The level L0 firmware generates a self-signed certificate signing request (CSR) for DevID. The CSR is sent by the L0 firmware to the manufacturer's certificate authority. In response, the manufacturer's certificate authority 228 issues a certificate for the DevID and makes it available 410 to the verifier 200.

Before transferring control to firmware layer L1, the L0 firmware layer erases the secrets CDI and DevIDpriv and copies the public keys, signature and measurements of L0 and L1 to an area of memory accessible to L1.

In the process of FIG. 4 if there is a change to firmware layer L0 because of a firmware upgrade, then the attestation key AK becomes out of date since it was based on a measurement of the L0 firmware layer.

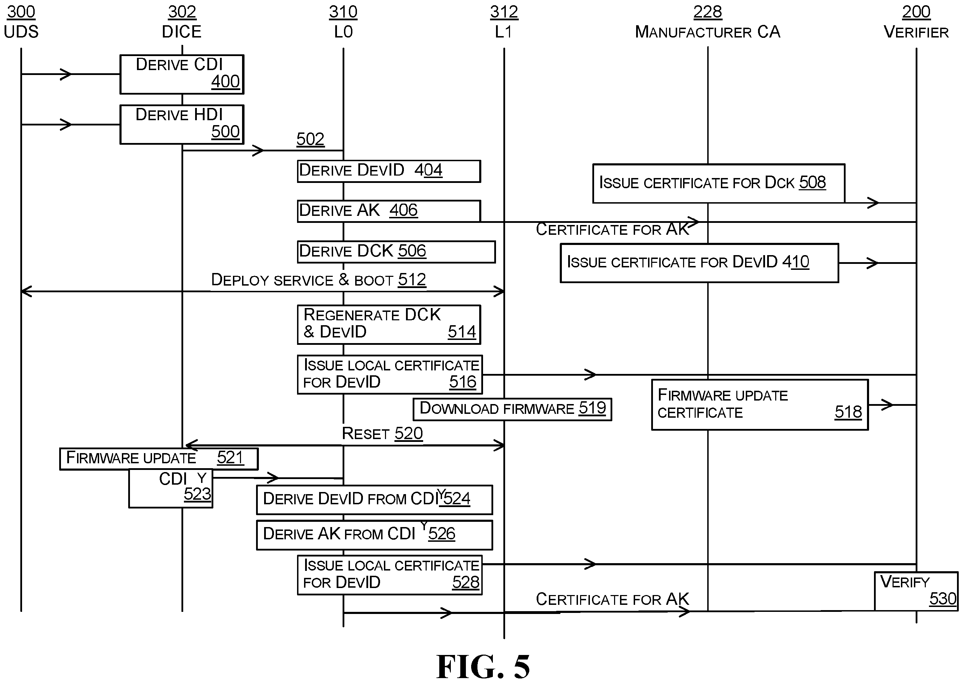

FIG. 5 is a schematic diagram of another method of attesting a firmware layer which is compatible with an update to the firmware layer. In FIG. 5 the vertical lines are given the same reference numerals as for FIG. 4. But note that DICE 302 can be any immutable firmware layer which has access to the unique device secret.

When the computing device comes out of reset, control transfers to the DICE 302 which is immutable. The DICE authenticates the L0 firmware using a public firmware signing key embedded in DICE as a constant. The DICE 302 derives 400 a CDI from the unique device secret (UDS) 300. The CDI is expressed mathematically as given above for FIG. 4.

The DICE 302 sends (or makes available) the CDI to the L0 firmware 310. In an example the CDI and HDI are passed to L0 (indicated by 502 in FIG. 5) by writing them to a pre-defined static random-access memory (SRAM) location before transferring control to the L1 firmware.

The DICE 302 derives 500 an additional secret referred to herein a Hardware Device Identity (HDI) from the unique device secret 300 which is not salted by measurement of the L0 firmware layer 310. The DICE 302 sends or otherwise makes available, the HDI to the L0 firmware layer 310 such as using message 502. Generation of the HDI is expressed mathematically as follows:

$$HDI = KDF[UDS]("DeviceCA")$$

Which is expressed in words as the hardware device identity is derived using the key derivation function taking as arguments the unique device secret and a label string "DeviceCA" as a salt which is NOT a measurement of the L0 firmware. The DICE 302 sends (or makes available) the HDI to the L0 firmware 310 such as using message 502.

The L0 firmware derives 404 a device identity key referred to as DevID from the CDI and a measurement of the L0 firmware as follows.

$$DevID_{priv}, DevID_{pub} = asym\_keygen(KDF[CDI]("Identity"))$$

Which is expressed in words as the private and public parts of the device identity public-private key pair are computed using an asymmetric key generation function given as argument, the result of the key derivation function applied to the compound device identity and a label string "Identity" as a salt to the KDF.

The L0 firmware derives 406 an attestation key (AK) from the CDI and an L1 measurement which is a measurement of the level L1 firmware. An AK certificate is sent to the verifier.

The L0 firmware derives an additional key referred to as a device certificate authority key (DCK) 506 from HDI as follows:

$$DCK_{priv}, DCK_{pub} = asym\_keygen(KDF[HDI]("DeviceCA"))$$

Which is expressed in words as, a device certificate authority public private key pair is derived by using an asymmetric key generation function which takes as argument the result of a key derivation function applied to the hardware device key and a label string "DeviceCA" as a salt to the KDF.

The DCK is shared by all authenticated versions of L0 and used to sign a certificate endorsing L0-specific DevID. The DCK acts as a certificate authority local to the device.

Before deploying the device, the manufacturer harvests CSRs for public DCK and DevID keys from the device, and issues certificates for both keys. The firmware on the device exposes certificate signing requests (CSRs) to the certificate authority. Hence FIG. 5 shows the manufacturer certificate authority 228 issuing a certificate for the DCK at operation 508 and issuing a certificate for the DevID at operation 410. The operation 410 is when the DevID Key certificate authority issues and signs the DevID Key certificate.

The device is deployed at operation 512 in FIG. 5. On boot the L0 firmware layer 310 of the device regenerates a DCK and a DevID at operation 514. The L0 firmware also issues a local certificate for the DevID at operation 516. The local certificate for the DevID is signed by the DCK.

Before updating the L0 firmware the manufacturer issues a firmware update certificate at operation 518. The firmware update certificate captures measurements of the new version of the L0 firmware layer and versions of the L0 firmware layer that are no longer certifiable.

A firmware update of either L0 or L1 is performed as follows.

L1 312 downloads 519 new firmware from a host computing device of the peripheral via a set of commands.

L1 writes the new firmware in a download slot in flash memory, sets a FW_UPDATE flag, and issues a reset 520.

The immutable layer 302 is designed to check the FW_UPDATE flag when it boots. When the flag is set, the immutable layer 302 will first authenticate and then copy the new firmware (only if the authentication succeeds) from the download slot to an active slot, and proceeds with the measured boot sequence of FIG. 5.

Thus the firmware update, is activated by the DICE layer at operation 521 of FIG. 5. After activating the firmware update the DICE 302 generates a new CDI from the unique device secret. The new CDI is denoted $CDI^Y$ at operation 523 of FIG. 5. The updated L0 firmware layer generates identity and attestation keys specific to the new version of the L0 firmware as follows:

The L0 firmware derives 526 an attestation key (AK) from $CDI^Y$ and the L0 measurement as follows. The L0 firmware derives 524 a device identity key from $CDI^Y$ as follows.

$$DevID^Y_{priv} DevID^Y_{pub} = asym\_keygen(KDF[CDI^Y](("Identity")))$$

$$AK^Y_{priv} AK^Y_{pub'} = asym\_keygen(KDF[CDI^Y](HASH(L1)))$$

Which is expressed in words as the device identity public private key pair is computed using the asymmetric key generation function given as argument, the result of the key derivation function applied to the compound device identity and with a label string "Identity" used as a salt to the KDF .

The equation for the attestation key is expressed in words as the attestation public-private key pair is computed using the asymmetric key generation function given as argument, the result of the key derivation function applied to the compound device identity and a salt which is a concatenation of a measurement of the L1 firmware and a label string "Attestation".

The L0 firmware generates 528 a local certificate for the DevID. The local certificate is sent to the verifier 200. The L0 firmware also sends a certificate for the attestation key derived at operation 526 to the verifier 200.

Before transferring control to firmware layer L1, the L0 firmware layer erases the secrets CDI and HDI and copies the public keys, signed certificates and measurements of L0 and L1 to an area of memory accessible to L1.

The verifier 200 carries out verification 530 using a combination of the firmware update certificate from operation 518, the local certificate for the DevID from operation 528 and the original certificates from operations 508 and 410 to check there is a valid certificate chain in place. The DevID certificate includes the L0 firmware identity i.e. the L0 firmware measurement. To verify that the new DevID certificates are issued by a device specific DCK rooted to the DCK certificate certification authority, a check is made that the new and old firmware measurement in the firmware update certificate match the firmware measurement included in the new and original DevID certificates, and consequently the rest of the certificate chain rooted at the DevID certificate. If the certificate chain is complete the verifier knows that the firmware layer L0 has been updated correctly. If the certificate chain is incomplete the verifier knows to stop using the device as the L0 firmware layer is incorrect.

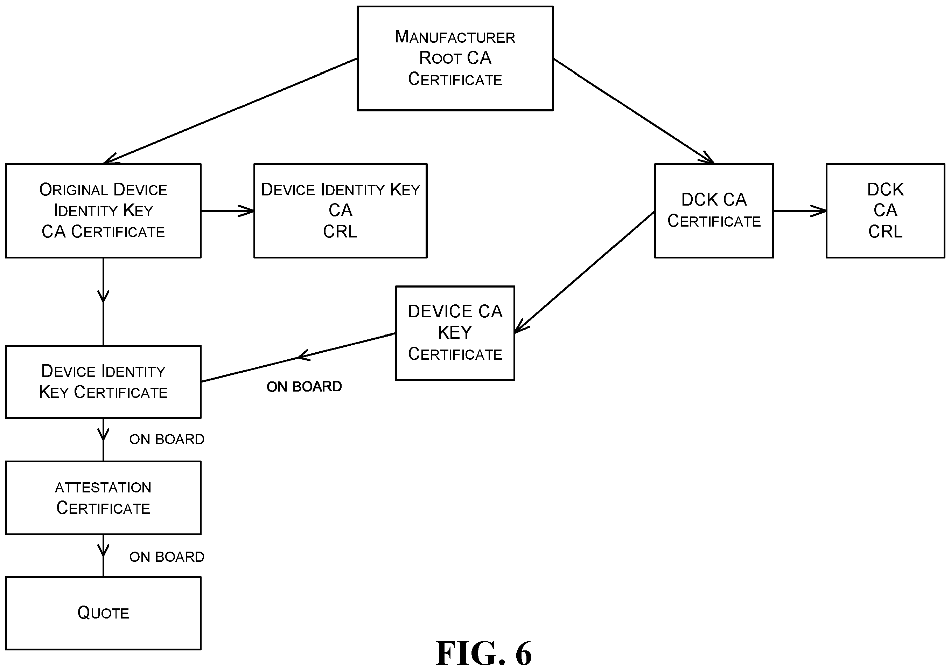

FIG. 6 shows an example certificate chain that the verifier 200 checks for. The root of the certificate chain is a manufacturer root certificate (referred to as a Root CA). The root has two branches. Using the root CA a DevID Key CA certificate is issued as indicated by one branch to an original device identity key certification authority certificate (DevID Key CA certificate). FIG. 6 shows a certificate revocation list CRL which is a list of certificates that have been revoked by the issuing certificate authority. The CRL is connected to the DevID Key CA certificate.

The second branch from the root goes to a DCK certificate authority certificate which is the certificate of operation 508 of FIG. 5. A certificate revocation list CRL for DCK certificates is connected to the DCK certificate authority certificate.

The use of the DCK to sign the local device identity certificate is indicated by the arrow joining the two branches that goes via a box denoting the Device CA Key Certificate. The operations 516 and 528 both involve the use of the DCK to sign the local device identity certificate. The certificate chain continues with an attestation certificate which is a child of the device identity key certificate which was signed by the DCK. The attestation certificate is the certificate that is signed using the DevID and endorses the Attestation Key derived in the operation 526. The Attestation Key is used by the L1 firmware to sign a Quote. The quote is the leaf certificate (final certificate) issued by the L1 firmware and contains information about the configuration of the accelerator device and the execution of the workload. The existence of attestation key allows to sign quotes without exposing the DevID to the L1 firmware. This way if the L1 is compromised by a bug, it is upgraded into a new version without the bug, and receives a different attestation key (because the L0 derives it from CDI using the L1 measurement).

An L1 firmware update is optionally applied at any point without the need for any additional certification from the manufacturer. When a device boots with a new version of L1 firmware, it generates a new attestation key AK with a signature over the public AK along with a hash of L1 using $DevID_{pub}$. Quotes generated by the updated version of L1 firmware are validated as long as a valid certificate endorsing $DevID_{pub}$ is available.

The immutable firmware layer is used to update a L1 firmware layer which is a firmware layer immediately above the L0 firmware layer. During boot of the computing device after updating the L1 firmware layer, the device generates an attestation private-public key pair and a certificate comprising the public part of the attestation key and the hash of the L1 firmware layer signed using the private part of the device identity key.

The term 'computer' or 'computing-based device' is used herein to refer to any device with processing capability such that it executes instructions. Those skilled in the art will realize that such processing capabilities are incorporated into many different devices and therefore the terms 'computer' and 'computing-based device' each include personal computers (PCs), servers, mobile telephones (including smart phones), tablet computers, set-top boxes, media players, games consoles, personal digital assistants, wearable computers, and many other devices.

The methods described herein are performed, in some examples, by software in machine readable form on a tangible storage medium e.g. in the form of a computer program comprising computer program code means adapted to perform all the operations of one or more of the methods described herein when the program is run on a computer and where the computer program may be embodied on a computer readable medium. The software is suitable for execution on a parallel processor or a serial processor such that the method operations may be carried out in any suitable order, or simultaneously.

This acknowledges that software is a valuable, separately tradable commodity. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

Those skilled in the art will realize that storage devices utilized to store program instructions are optionally distributed across a network. For example, a remote computer is able to store an example of the process described as software. A local or terminal computer is able to access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a digital signal processor (DSP), programmable logic array, or the like.

Any range or device value given herein may be extended or altered without losing the effect sought, as will be apparent to the skilled person.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items.

The operations of the methods described herein may be carried out in any suitable order, or simultaneously where appropriate. Additionally, individual blocks may be deleted from any of the methods without departing from the scope of the subject matter described herein. Aspects of any of the examples described above may be combined with aspects of any of the other examples described to form further examples without losing the effect sought.

The term 'comprising' is used herein to mean including the method blocks or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the scope of this specification.

**Claims**

1. A method of enabling an attestable update of a firmware layer (224) that provides a unique identity of a computing device (100) the method comprising:

   using an immutable firmware layer (222) to access a unique device secret (220);
   using the immutable firmware layer (222) to derive a hardware device identity, HDI, from the unique device secret (220);
   using the immutable firmware layer (222) to derive a compound device identity, CDI, from a measurement of the firmware layer (224) and the unique device secret (220);
   making the compound device identity CDI and HDI available to the firmware layer (224); and
   using the firmware layer (224) to issue a local certificate to endorse a device identity key, derived from the CDI, the local certificate signed by a key derived from the HDI.

2. The method of claim 1 wherein the key derived from the HDI is a device certificate authority key DCK and wherein the method comprises deriving the DCK using an asymmetric key generation function applied to a public private key pair, where the public private key pair is the result of a key derivation function applied to the HDI.

3. The method of claim 2 comprising sending a certificate signing request CSR to a certificate authority of a manufacturer of the device for a public part of the DCK.

4. The method of any preceding claim comprising sending a certificate signing request to a certificate authority of a manufacturer of the device for a public part of the device identity key.

5. The method of any preceding claim comprising updating the immutable firmware layer and then using the immutable firmware layer to generate a new CDI.

6. The method of any preceding claim further comprising, at a verifier, verifying the update of the firmware layer using:

   the local certificate;
   an update certificate of the firmware update; and
   a pair of original certificates previously issued for the device identity key and the key derived from the HDI by a certificate authority of a manufacturer of the device.

7. The method of any preceding claim wherein the immutable firmware layer implements a Device Identifier Composition Engine and additional functionality.

8. The method of any preceding claim wherein the attestable update is of a firmware layer that implements a Robust Internet of Things RIoT core.

9. The method of any preceding claim wherein the method comprises using the immutable firmware layer to update a L1 firmware layer which is a firmware layer immediately above the immutable firmware layer.

10. The method of claim 9 wherein the method comprises, during boot of the computing device after updating the L1 firmware layer, generating an attestation private-public key pair and a certificate comprising a public part of the attestation key and a hash of the L1 firmware layer signed using a private part of the device identity key.

11. A computing device (100) comprising:

> an immutable firmware layer (222);
> a unique device secret (220) burnt into hardware of the computing device (100); and
> a firmware layer (224), denoted L0, that provides a unique identity of the computing device (100);
> a computer storage medium having computer executable instructions for enabling an attestable update of the firmware layer L0 (224), when executed on the computing device, cause:
>
>> the immutable firmware layer (222) to access the unique device secret (220);
>> the immutable firmware layer (222) to derive a hardware device identity HDI from the unique device secret (220);
>> the immutable firmware layer (222) to derive a compound device identity CDI from a measurement of the firmware layer L0 (224) and the unique device secret (220);
>> the immutable firmware layer (222) to make the CDI and HDI available to the firmware layer L0 (224); and
>> the firmware layer L0 (224) to issue a local certificate to endorse a device identity key, derived from the CDI, the local certificate signed by a key derived from the HDI.

12. The computing device of claim 11 which is a peripheral selected from any of: a graphics processing unit, field-programmable gate array, application-specific integrated circuit, cryptographic accelerator, video processing unit, regular expression accelerator, data compression accelerator, artificial intelligence accelerator or other device used to complement a central processing unit.

13. The computing device of claim 11 or claim 12 wherein the key derived from the HDI is a device certificate authority key (DCK) and wherein the firmware layer L0 derives the DCK using an asymmetric key generation function applied to key material where the key material is the result of a key derivation function applied to the HDI.

14. The computing device of any of claims 11 to 13 wherein the firmware layer L0 is updated and the immutable firmware layer is used to generate a new CDI, the firmware layer L0 is configured to use the new CDI to derive a new device identity key using an asymmetric key generation function applied to key material where the key material is the result of a key derivation function applied to the new CDI and salted with a label string.

15. The computing device of any of claims 11 to 14, wherein the computing device is a peripheral computing device.

**Patentansprüche**

1. Verfahren zum Aktivieren einer bestätigbaren Aktualisierung einer Firmware-Schicht (224), die eine eindeutige Identität eines Computergeräts (100) bereitstellt, wobei das Verfahren umfasst:

> Verwenden einer unveränderlichen Firmware-Schicht (222), um auf ein eindeutiges Gerätegeheimnis (220) zuzugreifen;
> Verwenden der unveränderlichen Firmware-Schicht (222), um eine Hardware-Geräteidentität, HDI, aus dem eindeutigen Gerätegeheimnis (220) abzuleiten;
> Verwenden der unveränderlichen Firmware-Schicht (222), um eine zusammengesetzte Geräteidentität, CDI, aus einer Messung der Firmware-Schicht (224) und dem eindeutigen Gerätegeheimnis (220) abzuleiten;
> Bereitstellen der zusammengesetzten Geräteidentität CDI und HDI für die Firmware-Schicht (224); und
> Verwenden der Firmware-Schicht (224), um ein lokales Zertifikat auszustellen, das einen Geräteidentitätsschlüssel bestätigt, der aus der CDI abgeleitet ist, wobei das lokale Zertifikat mit einem Schlüssel signiert ist, der von der HDI abgeleitet ist.

2. Verfahren nach Anspruch 1, wobei der aus der HDI abgeleitete Schlüssel ein Gerätezertifizierungsstellenschlüssel, OCK, ist und wobei das Verfahren das Ableiten des DCK unter Verwendung einer asymmetrischen Schlüsselerstellungsfunktion umfasst, die auf ein öffentliches privates Schlüsselpaar angewendet wird, wobei das öffentliche private Schlüsselpaar das Ergebnis einer auf die HDI angewendeten Schlüsselableitungsfunktion ist.

3. Verfahren nach Anspruch 2, das das Senden einer Zertifikatssignierungsanfrage, CSR, an eine Zertifizierungsstelle eines Geräteherstellers für einen öffentlichen Teil des DCK umfasst.

4. Verfahren nach einem der vorhergehenden Ansprüche, das das Senden einer Zertifikatssignierungsanfrage an eine Zertifizierungsstelle eines Geräteherstellers für einen öffentlichen Teil des Geräteidentitätsschlüssels umfasst.

5. Verfahren nach einem der vorhergehenden Ansprüche, das das Aktualisieren der unveränderlichen Firmware-Schicht und die anschließende Verwendung der unveränderlichen Firmware-Schicht zum Erstellen einer neuen CDI umfasst.

6. Verfahren nach einem der vorhergehenden Ansprüche, das ferner das Überprüfen der Aktualisierung der Firmware-Schicht durch einen Prüfer unter Verwendung von Folgendem umfasst:

   dem lokalen Zertifikat;
   einem Aktualisierungszertifikat für die Firmware-Aktualisierung; und
   einem Paar Originalzertifikate, die zuvor von einer Zertifizierungsstelle eines Geräteherstellers für den Geräteidentitätsschlüssel und den von der HDI abgeleiteten Schlüssel ausgestellt wurden.

7. Verfahren nach einem der vorhergehenden Ansprüche, wobei die unveränderliche Firmware-Schicht eine Gerätekennzeichnungszusammensetzungs-Engine und zusätzliche Funktionen implementiert.

8. Verfahren nach einem der vorhergehenden Ansprüche, wobei es sich bei der bestätigbaren Aktualisierung um eine Firmware-Schicht handelt, die einen Robust Internet of Things-, RIoT-, Kern implementiert.

9. Verfahren nach einem der vorhergehenden Ansprüche, wobei das Verfahren die Verwendung der unveränderlichen Firmware-Schicht zum Aktualisieren einer L1-Firmware-Schicht umfasst, bei der es sich um eine Firmware-Schicht unmittelbar über der unveränderlichen Firmware-Schicht handelt.

10. Verfahren nach Anspruch 9, wobei das Verfahren während des Bootens des Computergeräts nach der Aktualisierung der L1-Firmwareschicht das Erzeugen eines privaten und öffentlichen Bestätigungsschlüsselpaars und eines Zertifikats umfasst, das einen öffentlichen Teil des Bestätigungsschlüssels und einen Hash der L1-Firmwareschicht umfasst, der unter Verwendung eines privaten Teils des Geräteidentitätsschlüssels signiert ist.

11. Computergerät (100), das umfasst:

   eine unveränderliche Firmware-Schicht (222);
   ein eindeutiges Gerätegeheimnis (220), das in die Hardware des Computergeräts (100) eingebrannt ist; und
   eine Firmware-Schicht (224), bezeichnet mit L0, die eine eindeutige Identität des Computergeräts (100) bereitstellt;
   ein Computerspeichermedium mit computerausführbaren Anweisungen zum Aktivieren einer bestätigbaren Aktualisierung der Firmware-Schicht L0 (224), die, wenn sie auf dem Computergerät ausgeführt werden, bewirken, dass:

      die unveränderliche Firmware-Schicht (222) auf das eindeutige Gerätegeheimnis (220) zugreift;
      die unveränderliche Firmware-Schicht (222) eine Hardware-Geräteidentität HDI aus dem eindeutigen Gerätegeheimnis (220) ableitet;
      die unveränderliche Firmware-Schicht (222) eine zusammengesetzte Geräteidentität, CDI, aus einer Messung der Firmware-Schicht L0 (224) und dem eindeutigen Gerätegeheimnis (220) ableitet;
      die unveränderliche Firmware-Schicht (222) die CDI und HDI der Firmware-Schicht L0 (224) zur Verfügung stellt; und
      die Firmware-Schicht L0 (224) ein lokales Zertifikat zur Bestätigung eines Geräteidentitätsschlüssels, der von der CDI abgeleitet ist, ausgibt, wobei das lokale Zertifikat mit einem von der HDI abgeleiteten Schlüssel signiert ist.

12. Computergerät nach Anspruch 11, das ein Peripheriegerät ist, ausgewählt aus einem der folgenden Geräte: Grafikprozessor, feldprogrammierbaren Gate-Array, anwendungsspezifischen integrierten Schaltkreis, kryptografischen Beschleuniger, Videoprozessor, Beschleuniger für reguläre Ausdrücke, Datenkomprimierungsbeschleuniger, Beschleuniger für künstliche Intelligenz oder einem anderen Gerät, das zur Ergänzung einer zentralen Verarbeitungseinheit verwendet wird.

13. Computergerät nach Anspruch 11 oder Anspruch 12, wobei der von der HDI abgeleitete Schlüssel ein Gerätezertifizierungsstellenschlüssel (DCK) ist und wobei die Firmwareschicht L0 den DCK unter Verwendung einer auf Schlüsselmaterial angewendeten asymmetrischen Schlüsselerstellungsfunktion ableitet, wobei das Schlüsselmaterial das Ergebnis einer auf die HDI angewendeten Schlüsselableitungsfunktion ist.

14. Computergerät nach einem der Ansprüche 11 bis 13, wobei die Firmware-Schicht L0 aktualisiert wird und die unveränderliche Firmware-Schicht zum Erstellen einer neuen CDI verwendet wird, wobei die Firmware-Schicht L0 konfiguriert ist, um die neue CDI zum Ableiten eines neuen Geräteidentitätsschlüssels zu verwenden und dabei eine auf Schlüsselmaterial angewendete asymmetrische Schlüsselerstellungsfunktion zu verwenden, wobei das Schlüsselmaterial das Ergebnis einer auf die neue CDI angewendeten und mit einer Bezeichnungszeichenfolge versehenen Schlüsselableitungsfunktion ist.

15. Computergerät nach einem der Ansprüche 11 bis 14, wobei es sich bei dem Computergerät um ein Peripheriegerät handelt.

## Revendications

1. Procédé d'activation d'une mise à jour pouvant être attestée d'une couche de micrologiciel (224), laquelle fournit une identité unique d'un dispositif informatique (100), le procédé comprenant :

   l'utilisation d'une couche de micrologiciel immuable (222) pour accéder à un secret de dispositif unique (220) ;
   l'utilisation de la couche de micrologiciel immuable (222) pour déduire une identité de dispositif matériel, HDI, à partir du secret de dispositif unique (220) ;
   l'utilisation de la couche de micrologiciel immuable (222) pour déduire une identité de dispositif combiné, CDI, à partir d'une mesure de la couche de micrologiciel (224) et du secret de dispositif unique (220) ;
   la mise à disposition de l'identité de dispositif combiné CDI et de la HDI pour la couche de micrologiciel (224) ; et
   l'utilisation de la couche de micrologiciel (224) pour émettre un certificat afin d'approuver une clé d'identité de dispositif, dérivée de la CDI, le certificat local étant signé par une clé déduite de la HDI.

2. Procédé selon la revendication 1, dans lequel la clé dérivée de la HDI est une clé d'autorité de certificat de dispositif, DCK, et dans lequel le procédé comprend la déduction de la DCK en utilisant une fonction de génération de clé asymétrique appliquée à une paire de clés publique-privée, la paire de clés publique-privée étant le résultat d'une fonction de dérivation de clé appliquée à la HDI.

3. Procédé selon la revendication 2, comprenant l'envoi d'une demande de signature de certificat CSR à une autorité de certification d'un fabricant du dispositif pour une partie publique de la DCK.

4. Procédé selon l'une quelconque des revendications précédentes, comprenant l'envoi d'une demande de signature de certificat à une autorité de certification d'un fabricant du dispositif pour une partie publique de la clé d'identité de dispositif.

5. Procédé selon l'une quelconque des revendications précédentes, comprenant la mise à jour de la couche de micrologiciel immuable, puis l'utilisation de la couche de micrologiciel immuable pour générer une nouvelle CDI.

6. Procédé selon l'une quelconque des revendications précédentes comprenant en outre, chez un vérificateur, la vérification de la mise à jour de la couche de micrologiciel en utilisant :

   le certificat local ;
   un certificat de mise à jour de la mise à jour du micrologiciel ; et
   une paire de certificats originaux antérieurement émis pour la clé d'identité de dispositif et la clé dérivée de la HDI par une autorité de certification d'un fabricant du dispositif.

7. Procédé selon l'une quelconque des revendications précédentes, dans lequel la couche de micrologiciel immuable implémente un moteur de composition d'identifiant de dispositif et une fonctionnalité supplémentaire.

8. Procédé selon l'une quelconque des revendications précédentes, dans lequel la mise à jour pouvant être attestée concerne une couche de micrologiciel, laquelle implémente un noyau de l'Internet des objets robuste, RIoT.

**9.** Procédé selon l'une quelconque des revendications précédentes, dans lequel le procédé comprend l'utilisation de la couche de micrologiciel immuable pour mettre à jour une couche de micrologiciel L1, laquelle est une couche de micrologiciel immédiatement supérieure à la couche de micrologiciel immuable.

**10.** Procédé selon la revendication 9, dans lequel le procédé comprend, lors du démarrage du dispositif informatique après la mise à jour de la couche de micrologiciel L1, la génération d'une paire de clés privée-publique d'attestation et d'un certificat comprenant une partie publique de la clé d'attestation et un hachage de la couche de micrologiciel L1 signé à l'aide d'une partie privée de la clé d'identité de dispositif.

**11.** Dispositif informatique (100) comprenant :

une couche de micrologiciel immuable (222) ;
un secret de dispositif unique (220) gravé dans un matériel du dispositif informatique (100) ; et
une couche de micrologiciel (224), notée L0, laquelle fournit une identité unique du dispositif informatique (100) ;
un support d'enregistrement informatique comportant des instructions exécutables par ordinateur pour permettre une mise à jour pouvant être attestée de la couche de micrologiciel L0 (224), lesquelles, lorsqu'elles sont exécutées sur le dispositif informatique, amènent :

la couche de micrologiciel immuable (222) à accéder au secret de dispositif unique (220) ;
la couche de micrologiciel immuable (222) à déduire une identité de dispositif matériel, HDI, à partir du secret de dispositif unique (220) ;
la couche de micrologiciel immuable (222) à déduire une identité de dispositif combiné, CDI, à partir d'une mesure de la couche de micrologiciel L0 (224) et du secret de dispositif unique (220) ;
la couche de micrologiciel immuable (222) à mettre à disposition la CDI et la HDI pour la couche de micrologiciel L0 (224) ; et
la couche de micrologiciel L0 (224) à émettre un certificat local pour approuver une clé d'identité de dispositif, dérivée de la CDI, le certificat local étant signé par une clé dérivée de la HDI.

**12.** Dispositif informatique selon la revendication 11, lequel est un périphérique choisi dans le groupe composé par : une unité de traitement graphique, un réseau de portes programmables, un circuit intégré spécifique à une application, un accélérateur cryptographique, une unité de traitement vidéo, un accélérateur d'expression régulière, un accélérateur de compression de données, un accélérateur d'intelligence artificielle ou tout autre dispositif utilisé pour compléter une unité centrale de traitement.

**13.** Dispositif informatique selon la revendication 11 ou la revendication 12, dans lequel la clé dérivée de la HDI est une clé d'autorité de certification de dispositif (DCK) et dans lequel la couche de micrologiciel L0 déduit la DCK en utilisant une fonction de génération de clé asymétrique appliquée au matériel de clé, le matériel de clé étant le résultat d'une fonction de dérivation de clé appliquée à la HDI.

**14.** Dispositif informatique selon l'une quelconque des revendications 11 à 13, dans lequel la couche de micrologiciel L0 est mise à jour et la couche de micrologiciel immuable est utilisée pour générer une nouvelle CDI, la couche de micrologiciel L0 est configurée pour utiliser la nouvelle CDI pour déduire une nouvelle clé d'identité de dispositif en utilisant une fonction de génération de clé asymétrique appliquée au matériel de clé, le matériel de clé étant le résultat d'une fonction de dérivation de clé appliquée à la nouvelle CDI et salé d'une chaîne d'étiquette.

**15.** Dispositif informatique selon l'une quelconque des revendications 11 à 14, le dispositif informatique étant un dispositif informatique périphérique.

FIG. 1

| USER APPLICATION 200 | | DEVICE MANUFACTURER CERTIFICATE AUTHORITY 228 |

USER RUNTIME 202

DEVICE DRIVER 204

HOST OS 206

HYPERVISOR 208

CPU 210

102

PCI BUS 212

100

CODE & DATA 214

FIRMWARE 216

DEVICE FIRMWARE 226

L0 FIRMWARE 224

HARDWARE 218

UNIQUE DEVICE SECRET

IMMUTABLE LAYER 222

220

**FIG. 2**

DEVICE FIRMWARE HIGHER LAYERS
314

DEVICE FIRMWARE L1
312

RIoT CORE L0 FIRMWARE
(PART OF THE FIRST-STAGE BOOT LOADER)
310

KEYS AND CERTIFICATE FOR DEVICE AUTHENTICATION
308

DICE
DEVICE IDENTIFIER COMPOSITION ENGINE
(IN HARDWARE OR ROM)
302

A PER-DEVICE SECRET CALLED THE CDI
304

UNIQUE DEVICE SECRET
300

**FIG. 3**

| 300 | 302 | 310 | 312 | 228 | 200 |
|-----|-----|-----|-----|-----|-----|
| UDS | DICE | L0 | L1 | MANUFACTURER CA | VERIFIER |

DERIVE CDI FROM UDS
AND L0 MEASUREMENT
400

CDI 402

DERIVE DEVID FROM
CDI                    404

DERIVE AK FROM
CDI AND L1 MEASUREMENT
406

CERTIFICATE FOR AK | 408
SIGNED BY DEVID

ISSUE CERTIFICATE
FOR DEVID
410

**FIG. 4**

**FIG. 5**

VERIFIER 200

MANUFACTURER CA 228

L1 312

L0 310

DICE 302

UDS 300

ISSUE CERTIFICATE FOR DCK 508

CERTIFICATE FOR AK

ISSUE CERTIFICATE FOR DEVID 410

FIRMWARE UPDATE CERTIFICATE 518

CERTIFICATE FOR AK

VERIFY 530

DERIVE DEVID 404

DERIVE AK 406

DERIVE DCK 506

DEPLOY SERVICE & BOOT 512

REGENERATE DCK & DEVID 514

ISSUE LOCAL CERTIFICATE FOR DEVID 516

DOWNLOAD FIRMWARE 519

RESET 520

DERIVE DEVID FROM CDI$^Y$ 524

DERIVE AK FROM CDI$^Y$ 526

ISSUE LOCAL CERTIFICATE FOR DEVID 528

DERIVE CDI 400

DERIVE HDI 500

502

FIRMWARE UPDATE 521

CDI$^Y$ 523

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3637297 A1
- CN 109492352 A
- US 20200193065 A1